# EUROPEAN PATENT SPECIFICATION

(11) **EP 1 542 123 B1**
(45) Date of publication and mention of the grant of the patent: **23.01.2008**
(21) Application number: 04104415.7
(22) Date of filing: 13.09.2004
(51) Int. Cl.: G06F 9/44

(54) **Method and system for automatically generating service interfaces for a service oriented architecture**
Verfahren und System zur automatischen Erzeugung von Dienstschnittstellen für eine dienstorientierte Architektur
Procédé et système de génération automatique des interfaces de service pour une architecture orientée service

(30) Priority: 10.12.2003 EP 03368113
(43) Date of publication of application: 15.06.2005
(73) Proprietor: International Business Machines Corporation, Armonk, NY 10504 (US)
(72) Inventor: Fiammante, Marc, 06700 Saint Laurent du Var (FR); Mommeja, Lionel, 06000 Nice (FR)
(74) Representative: Therias, Philippe

(56) References cited:
- WO-A-02/095605
- US-A1- 2003 110 242

## Description

### Field of the Invention

The present invention generally relates to a method and a system for automatically generating service interfaces for a Service Oriented Architecture (SOA) and particularly, but not exclusively, to a method and a system for automatically generating service interfaces for web services in a SOA.

### Background

The process of integrating the operations of disparate information systems and software applications to support a business process has historically been a complex, costly, and time-consuming task. Dogged by a lack of standards in terms of programming languages, operating systems, application interfaces, and networking protocols, previous ways of integrating the operations of disparate information systems and software applications have required extensive system integrator resources supported by complex technologies. The resulting systems and applications for executing business processes comprise tightly coupled applications and sub-systems. One drawback is that a change to any one sub-system can lead to a breakage in a variety of dependent applications. This brittle aspect of such systems is partly responsible for the high cost of system maintenance and the limitations imposed by such systems on developing ebusiness, both internally within an organisation and externally with other entities.

A Service Oriented Architecture (SOA) is a conceptual architecture for implementing ebusiness. It has been proposed as a means of addressing the aforementioned issues. The basic idea is to wrap an application within a well defined service interface in order to turn a monolithic application into a "service". This wrapping process creates an abstraction of the application that masks the programming language, operating system, networking protocol and/or database that the application uses. Thus, the service interface, i.e. the description of the service, makes it possible to integrate a number of services in a seamless fashion. Security, middleware and communications technologies can also be wrappered to participate in a service as environmental prerequisites. Wrappering allows services to enable virtual enterprises to link their heterogeneous systems through HyperText Transfer Protocol (HTTP), for example, and to participate in single, administrative domains.

Over the last decade or so, three major attempts have been made at providing SOAs. CORBA, J2EE, and DCOM have each supported in their own ways the concepts of a service-oriented architecture. CORBA (Common Object Request Broker Architecture) was developed under the auspices of the Object Management Group (OMG). It is middleware. A CORBA-based program from any vendor, on almost any computer, operating system, programming language, and network, can interoperate with a CORBA-based program from the same or another vendor, on almost any other computer, operating system, programming language, and network. J2EE (the Java 2 Platform, Enterprise Edition) defines the standard for developing multi-tier enterprise applications. J2EE simplifies enterprise applications by basing them on standardized, modular components, by providing a complete set of services to those components, and by handling many details of application behaviour automatically, without complex programming. DCOM (Distributed Component Object Model) is an extension of the Component Object Model (COM). DCOM was introduced in 1996 and is designed for use across multiple network transports, including Internet protocols such as HTTP.

In order for a SOA to become accepted, the language used to wrap the applications must have universal acceptance. DCOM uses Microsoft-IDL, CORBA uses CORBA-IDL and J2EE uses Java. None of these can be considered as a universal language.

Another issue is the need for flexibility in the service interface. A service interface needs to be able to evolve over time and have the capacity to respond to different message types. This is needed because business and software environments change over time. In J2EE and CORBA the service interface is a rigid entity and is not well disposed towards change. DCOM supports some notion of service interface changes, but in such a complicated manner that it is extremely difficult to use. This inability to evolve flexible service interfaces has so far made SOAs hard to deploy and manage.

All of these previous approaches to SOAs have combined two distinct concepts together: firstly, the concept of building a service interface to a piece of software, and secondly, the concept of creating some programming logic to implement that service interface. Therefore, if one wishes to utilise any one of J2EE, DCOM, or CORBA, one is first of all required to learn its programming models and its very substantial and complex API set.

In view of the above, it has been realised that to successfully implement SOAs, the technology of web services is the best connection technology for SOAs. This relies on a core set of technologies that reflect the work of researchers and consultants from a variety of companies and industry organizations. These technologies include:
XML: The Extensible Mark-up Language. This is a text-based mark-up language specification from the World Wide Web Consortium (W3C). Unlike HTML, which uses tags for describing presentation and data, XML is strictly for the definition of portable structured data. It can be used as a language for defining data descriptive languages, such as mark-up grammars or vocabularies and interchange formats and messaging protocols.
SOAP: Simple Object Access Protocol. This is an XML-based lightweight protocol for the exchange of information in a decentralized, distributed environment. SOAP defines a messaging protocol between requestor and provider objects, such that the requesting objects can perform a remote method invocation on the providing objects in an object-oriented programming fashion. The SOAP specification was co-authored by Microsoft, IBM, Lotus, UserLand, and DevelopMentor. SOAP now forms the basis for distributed object communication in most vendor implementations of SOAs. Although SOA does not define a messaging protocol, SOAP has recently been referred to as the Services-Oriented Architecture Protocol due to its common use in SOA implementations. One aspect of SOAP is that it is vendor-neutral, allowing for independent implementations relative to platform, operating system, object model, and programming language. Additionally, transport and language bindings as well as data-encoding preferences are all implementation dependent.
WSDL: The Web Services Description Language. This is an XML vocabulary that provides a standard way of describing service Interface Definition Languages (IDLs). WSDL is the resulting artifact of a convergence of activity between the Network Accessible Service Specification Language (NASSL) developed by IBM and the Specification and Description Language (SDL) developed by Microsoft. It provides a simple way for service providers to describe the format of requests and response messages for remote method invocations (RMIs). WSDL addresses this topic of service IDLs independently of the underlying protocol and encoding requirements. In general, WSDL provides an abstract language for defining the published operations of a service with their respective parameters and data types. The language also addresses the definition of the location and binding details of the service.
UDDI: The Universal Description, Discovery, and Integration specification provides a common set of SOAP APls that enable the implementation of a service broker. The UDDI specification was outlined by IBM, Microsoft, and Ariba to help facilitate the creation, description, discovery, and integration of Web based services. The motivation behind UDDl.org, a partnership and cooperation between more than 70 industry and business leaders, is to define a standard for business to business (B2B) interoperability although this could also be employed for business to consumer (B2C) applications.

It will be appreciated that these technologies do not comprise an exhaustive or exclusive set of technologies for implementing web type services on SOAs. However, of these technologies, XML is essential since it is generally accepted that a web type service requires an XML-based description mechanism of some kind that can be used to describe its form and function.

A SOA provides an excellent foundation for intra and inter enterprise computing. This enables applications embodying business processes to be quickly and efficiently implemented as web type services and also enables a reduction in the degree of human involvement in administering the implementation of such services. Many of the implementations will comprise machine to machine invocations of the services requiring no human involvement whatsoever.

The drive for adoption of SOAs by enterprises relates to the benefits that can result. Implementation of business processes through SOAs can improve collaboration with business partners to create between enterprises a better collaboration hub than those of their competitors thus improving their ability to win in the market place. Such collaboration hubs can also improve time to market by compressing the supply chain, for example. As a result, many enterprises today focus on designing external services rather than internal services since the external services can have a greater impact on their business generation and competitiveness.

The quality of web based services depends on many factors including security, service publishing, accountability, traceability, performance and service interface definition.

Document US-A-2003/0110242 deals with dynamic configuration of web service containers based on current usage of services.

The present invention is directed to the design of service interfaces. To design a good service interface, a service designer must consider carefully the granularity of the defined service. On the one hand, a service should be coarse grained for performance and encapsulation reasons, but, on the other hand, it should be fine grained to allow for a maximum of flexibility. In the case where the service is too coarse grained, more data than the 'client' requires is sent across the network, whereas, where the service is too fine grained, the 'client' must make more than one network trip to obtain all the data required.

Currently, service interfaces are designed in real-time by human operatives (designers) using real-time tools such as IBM's Alphaworks Web Services Outsourcing Manager that enables dynamic on demand composition of web service based business processes and IBM's Websphere Application Server Enterprise Process Choreographer that enables business processes to be combined with any service offered by products supporting the open J2EE architecture. However, there is currently no means to automatically generate or modify service interfaces taking into account service usage resulting from 'clients' invocations of such services.

### Object of the Invention

It is an object of the present invention to provide a method and a system that obviate or mitigate shortcomings of existing arrangements.

It is a particular object of the present invention to provide a method and a system for automatically generating and/or modifying service interfaces for web services implemented on a SOA in response to usage of said services.

### Summary of the Invention

In a first aspect, the present invention provides a method of automatically generating a service interface for a machine implementable application, the method being characterised in that it comprises the steps of: deploying a plurality of service interfaces defining respective services associated with said application; logging data recording usage of the operations in the services defined by said service interfaces; identifying from said usage data a recurring service usage pattern; and, in response to said identified recurring service usage pattern, automatically generating a new operation in a new service interface.

The machine implementable application is represented in a network environment such as the Internet by a plurality of service interfaces defining the functions comprising said application. This enables users (clients) connected to the network to invoke the services defined by said service interfaces. This aspect of the present invention addresses the issue of improving the granularity of a service based on service usage without requiring a human operative (designer) to manually redesign the service interface using real-time tools. In effect, the present invention provides a run-time method for automatically optimising service interfaces based on client usage patterns.

The step of generating a new service interface may comprise the step of modifying one or more existing service interfaces.

It will be understood that the generation of a new service interface may comprise updating or modifying an existing service interface. Therefore, the term "new" in this context should not be taken as being limitative of the scope of the invention to the effect that this term excludes forming a new service interface from those interfaces which already exist.

The or each service interface may embody one or more functions comprising said machine implementable application.

A service may comprise a simple application function such as an exchange of data or a logical grouping of application components (functions) to accomplish a business process.

Preferably, the step of generating a new service interface comprises combining the functions of a number of existing service interfaces.

This is based on the premise that services are initially designed to be fine-grained in order to provide maximum flexibility. Service usage patterns may then reveal that a client or clients systematically invoke a group of services in a regular pattern of network visits. In response to such a recurring usage pattern, the method of the invention proposes that a new service interface comprising the group of services is automatically defined and deployed thus optimising the granularity of the new service interface so formed and requiring a single network visit to invoke it.

The step of logging data recording usage of a service may comprise storing data comprising a service invocation signature in a service usage history database.

Preferably, the service invocation signature is logged before and/or after the service is executed.

Preferably further, the service invocation signature data is stored in the service usage history database together with data for any one or a combination of calling context, timestamp and invocation parameters.

The calling context data may comprise a caller identifier and a calling session identifier.

Storing and analysing data representing caller ID, calling session ID and timestamps makes it a relatively straight forward processing task to identify recurring service usage patterns which are the catalysts for optimising service interfaces.

Preferably, the step of identifying from said usage data a recurring service usage pattern comprises discriminating the service usage pattern to form a corresponding set of fine-grained services.

The fine-grained services form the building blocks for generating optimised coarse-grained service interfaces.

Preferably, the step of generating a new service interface comprises generating a new coarse-grained service interface by combining a number of the fine-grained service interfaces discriminated from the service usage pattern.

The new coarse-grained service interface may be automatically deployed.

Alternatively, new coarse-grained service interface is stored in a "To be" coarse-grained service definition database prior to being deployed.

Although the present invention is directed to automatically generating optimised service interfaces, it is envisaged that the method of the invention will include an opportunity for human involvement in the deployment of newly generated services interfaces, where appropriate.

The step of automatically generating a new service interface may be triggered by any one of a human operative, a system administrator and a scheduling engine.

Alternatively, the step of automatically generating a new service interface is automatically triggered by a recurring service usage pattern.

Preferably, a new service interface is automatically generated for deployment in a Service Oriented Architecture (SOA).

In another aspect, the present invention provides a system for automatically generating a service interface for a machine implementable application, the system being characterised in that it comprises: means for deploying a plurality of service interfaces defining respective services associated with said application; means for logging data recording usage of the operations in the services defined by said service interfaces; means for identifying from said usage data a recurring service usage pattern: and means for automatically generating a new operation in a new service interface in response to said identified recurring service usage pattern.

Preferably, the means for deploying a plurality of service interfaces comprises a service execution engine such as the IBM Websphere Application Server.

Preferably further, the service execution engine comprises a J2EE compliant application server.

The service execution engine may also comprise the means for logging data recording usage of the services and may include a database for storing logged data.

The means for identifying from said usage data a recurring service usage pattern and/or the means for automatically generating a new service interface in response to said identified recurring service usage pattern may comprise an autonomic self-optimising service definition component.

The autonomic self-optimising service definition component may comprise a services request affinity analyser for identifying from said usage data a recurring service usage pattern.

The autonomic self-optimising service definition component may comprise a service interface generator for automatically generating a new service interface in response to said identified recurring service usage pattern.

Preferably, the autonomic self-optimising service definition component includes one or both of a database for available fine-grained service interfaces and a database for existing coarse-grained service interfaces.

Preferably also, the autonomic self-optimising service definition component includes an inference engine and a rules database for controlling said service interface generator.

In a further aspect of the invention, there is provided a service interface generating component for automatically generating a service interface for a machine implementable application in a service oriented architecture which is characterised in that it comprises: means for identifying from service usage data a recurring service usage pattern; and means for automatically generating a new service interface in response to said identified recurring service usage pattern.

Preferably, said means for identifying from service usage data a recurring service usage pattern comprises means for discriminating the service usage pattern to form a corresponding set of fine-grained and/or coarse-grained services.

Preferably also, the means for automatically generating a new service interface in response to said identified recurring service usage pattern generates a new coarse-grained service interface by combining a number of the fine-grained and/or coarse-grained service interfaces discriminated from the service usage pattern.

In yet another aspect of the present invention, there is provided a service execution engine for use in the aforedescribed method.

In yet a further aspect of the present invention, there is provided a computer program for implementing the aforedescribed method.

In yet a further aspect of the invention, there is provided a computer implementation of the aforedescribed method.

### Brief Description of the Drawings

Figure 1 is a schematic block diagram of a system for automatically generating a service interface in accordance with the invention;
Figure 2 is a schematic block diagram of a service interface generating component of the system of figure 1;
Figure 3 is a flow diagram illustrating a method in accordance with the invention;
Figure 4 is a schematic block diagram illustrating the steps comprising a first part of the method in accordance with the invention;
Figure 5 is a schematic block diagram illustrating in more detail one implementation of a service invocation data capture step of the first part of the method in accordance with the invention;
Figure 6 comprises a Java source code example for implementing the service invocation data capture step of figure 5; and
Figure 7 is a schematic block diagram illustrating the steps comprising a second part of the method in accordance with the invention.

### Description of a Preferred Embodiment

The foregoing and further features of the present invention will be more readily understood, by way of example only and without limitation to the scope of the invention, from the following description of a preferred embodiment with reference to the drawings.

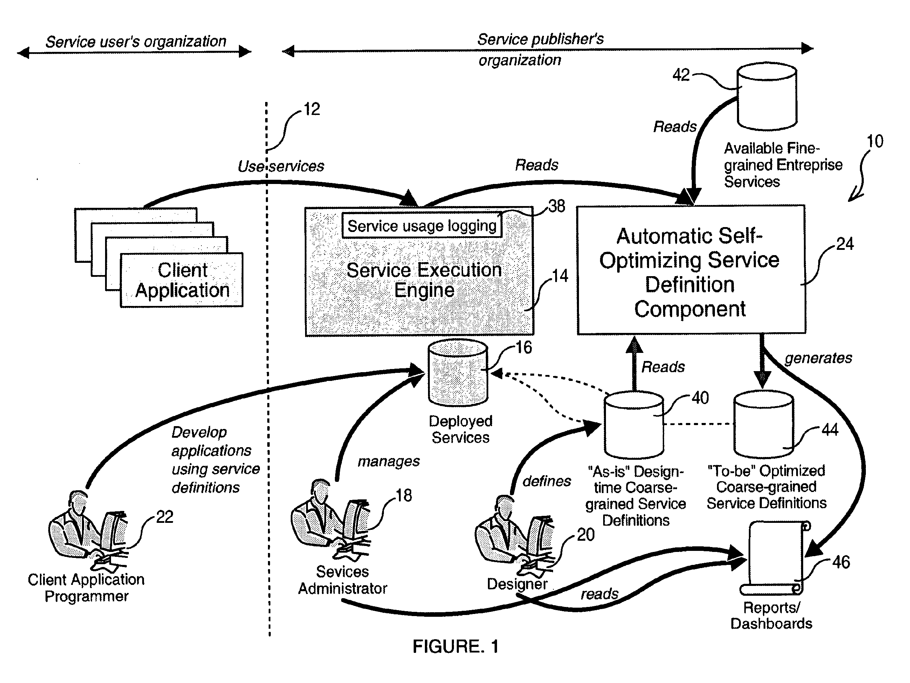

Referring to figure 1, the system of the invention generally denoted as 10 comprises, on a service provider's (publisher's) side of a network interface denoted by dashed line 12, a services execution engine 14 which enables clients to invoke deployed services over a web enabled network (not shown) such as the internet. The deployed services are stored in a deployed services database 16. The service interfaces defining the services may comprise between them one or more service provider business processes or applications. The execution engine 14 may comprise an IBM Websphere application server, for example, or any J2EE compliant server. Also on the service provider's side of the network interface 12, there may be a services administrator 18 for managing deployed services. The services administrator 18 may be a human operative although an intelligent software agent may fulfil this role. A designer 20 for designing new services to be deployed comprises a human operative who designs new services in accordance with known real-time techniques employing real-time design tools such as IBM's Alphaworks Web Services Outsourcing Manager that enables dynamic on demand composition of web service based business processes and IBM's Websphere Application Server Enterprise Process Choreographer that enables business processes to be combined with any service offered by products supporting the open J2EE architecture. On a client side of the network interface 12, there may be a client application programmer 22 for developing new applications using existing services definitions. In a like manner to the service provider's designer 20, this comprises a human operative working in a real-time mode. It will be understood therefore that there is nothing new in the arrangement as described so far and that such an arrangement will be familiar to the skilled artisan.

The system in accordance with the invention includes a service interface generating component 24 also referred to as an autonomic self-optimising service definition component. The purpose of this component 24 is to automatically generate new service interfaces based on identified recurring client usage patterns. Consequently, this component, in concert with other components of the system, can allow new service interfaces to be automatically generated and deployed in a run-time mode as will become more apparent from the following description.

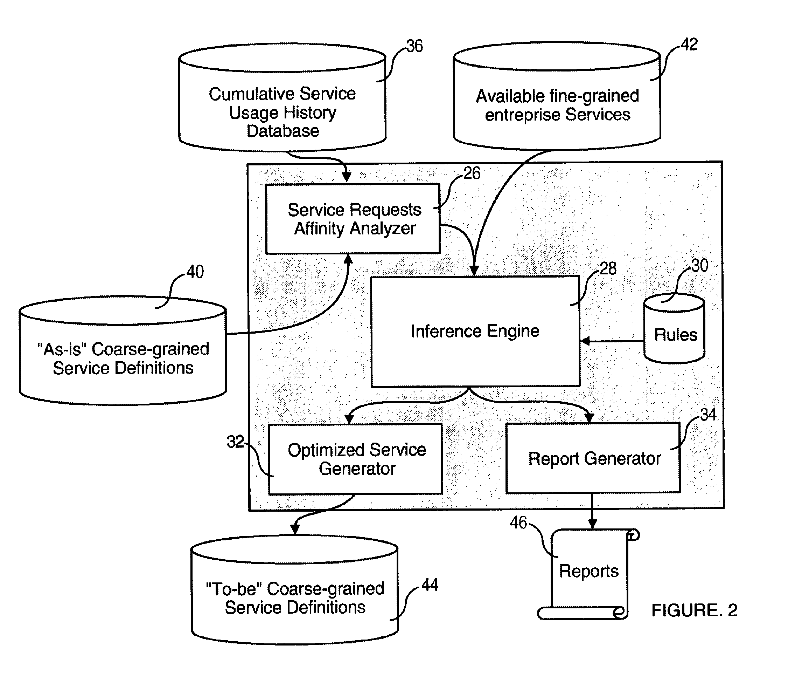

The structure of the service interface generating component 24 and its interaction with other components of the system can also be seen in figure 2. The service interface generating component 24 comprises a service requests affinity analyser 26, an inference engine 28, a rules database 30, and an optimised service generator 32. It may also include a report generator 34. All of the components of the service interface generating component 24, except the rules database 30, are implemented as software components. The services requests affinity analyzer 26 is equivalent to a web-site analyser but differs in that it does not process the usage statistics of a web site (web site logs). The analyzer 26 analyses the usage statistics of the web services invoked by the service execution engine 14. The inference engine 28 can be implemented using an off-the-shelf inference engine (rules based engine) such as the Versata logic engine which forms part of the Versata Logic Suite or IBM's Webshere business rules beans which forms part of IBM's Websphere Application Server. The optimized service generator 32 comprises a code generator that takes the results of the inference engine 28 processing to produce service definitions typically as WDSL files. The report generator 34 produces in human-understandable form the results of the inference engine processing. These reports have links to the content of a "To-be" optimized coarse-grained service definitions database 44. The "To-be" coarse-grained services definitions database 44 contains new service interfaces generated in response to analysed service usage patterns. For example, a service usage report may indicate that the operations Ox and Oy exposed by a specific service may be grouped into one operation of Ox+y because in 90% of cases these operations are called in this sequence.

In addition to the "To-be" coarse grained services definition database 44, the service interface generating component 24 is linked to a cumulative service usage history database 36, an "As-is" coarse-grained services definitions database 40, an available fine-grained enterprise services database 42 and a reports database 46.

Each of the services definitions databases 36, 40, 42 and 44 comprises a structured data store which can be implemented using a relational database, XML flat files and Plus Word processing for reports.

The cumulative service usage history database 36 is the equivalent of web site logs but in the present invention these comprise web service logs instead. These are low level logs in the sense that they just record what happens in terms of web service usage without adding any intelligence to the process.

The service requests affinity analyser 26 of the service interface generating component 24 is connected at one input to the service usage history database 36 that stores service usage data logged by a service usage logging function 38 of the service execution engine 14. The usage data stored in the usage history database 36 is analysed to identify recurring client usage patterns as one step in the method of automatically generating new service interfaces in accordance with the invention. As another input, the service requests affinity analyser 26 is connected to the "As-is" coarse-grained services definition database 40. The "As-is" coarse-grained service definitions database 40 is indirectly an input of the inference engine. The "As-is" coarse-grained services definitions database 40 is one and the same database as the deployed services database 16 (figure) despite being shown in figure 1 as separate databases.

The services request affinity analyser 26 provides to the inference engine 28 statistics about which operations have been used in a service interface and which have not been used, which ones are correlated to each others (to help the inference engine propose bigger coarse grained services), the number of parameters used for a given operation (to allow the inference engine reduce the size of a coarse-grained service), etc... Consequently, the output of the affinity analyser 26 can be considered as a super-set of the "As-is" coarse-grained service definition database 40.

The inference engine 28 has, as a further input, a connection to the available fine-grained enterprise services definitions database 42. The fine-grained enterprise services comprise the basic real-time designed service interfaces which define the methods/service elements comprising the business applications/processes that are being made available as web type services in the deployed/"As-is" services database 16/40

A final input to the inference engine 28 is a connection to the rules database 30 which defines the rules governing operation of the inference engine 28. The rules database 30 comprises a structured data store which can be implemented using a relational database, XML flat files and Plus Word processing for reports. Even though a system implementing this invention may come with a set of pre-packaged rules, the rules can also be very specific to a business. Pre-packaged rules may be standard service refactorisation rules such as:
- if service operations Ox and Oy are used in sequence within 2 seconds in 90% of the cases by 90% of the users then propose a new service operation Ox+y
- if parameter Px in service operation Ox is never used by 90% of the users then propose a new service operation without this parameter.
Business specific rules may for example be:
- Find correlations between Services "Car Gold Warranty" and "Car Special Insurance" during the period of three months after the marketing campaign beginning date.

An inference engine output connects to an input of the service generator 32 which outputs proposed (or "To-be") coarse-grained service definitions to the "To-be" coarse-grained service definitions database 44. The inference engine may also be connected to the report generator 34 for the generation of reports.

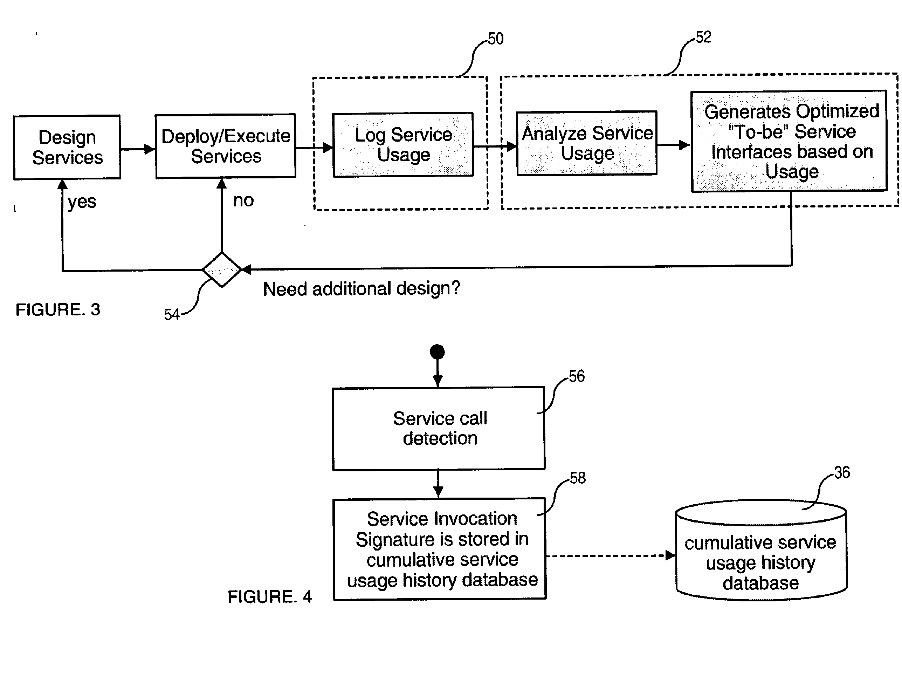

As illustrated in figure 3, the method of the invention builds on the known method of manually designing service interfaces in real-time utilising real-time tools such as IBM's Alphaworks Web Services Outsourcing Manager and comprises a first method part 50 of logging client usage of services and a second method part 52 of analysing usage data and automatically generating new service interfaces (definitions) in response to recurring usage patterns identified from said usage data. A new service definition automatically generated by the service interface generating component 24 may be deployed or alternatively a decision (decision point 54 in figure 3) may be made that the new service interface requires additional manual design and be directed to the "To-be" coarse-grained service database 44 for manual processing prior to be transferred to the deployed/"As-is" database 16/40. This decision point is always manual.

Referring to figure 4, the first method part 50 comprises a service call detection step 56 which is performed by the service execution engine 14. Service call detection is an existing functionality of a service execution engine such as IBM's Websphere Application Server. As a second step 58 of the first method part 50, service invocation data is logged and stored in the service usage history database 36. The invocation data may comprise a number of data elements (parameters) including one or any combination of a caller identifier (for example: <bank account number> , <warranty number>, <user id+purchase order id>, a calling session identifier (for example: <book serial number> to relate all the operations in respect of say a book being purchased by a given user (identified by its user id) or <discussion thread id> to relate say all the operations around a discussion on a given topic between several users (identified by their user id)), a timestamp before invocation and a timestamp after invocation. The invocation input parameters are those set by the service invoker, whereas the output parameters are those returned by the service server. For example, the Web Service Definition Language (WSDL) explicitly defines input and output parameters for a specific operation. In this regard, below is an example of the Java source code for an operation called "requestServiceDownload"

```
 <wsdl:operation name="requestServiceDownload">
                 <wsdl : in put        message="intf:requestServiceDownloadRequest"
 name ="requestServiceDownloadRequest" />
                 <wsdl:output       message=" intf:requestServiceDownloadResponse"
 name="requestServiceDownloadResponse" />
 </wsdl : operation >
 <wsdl:message name="requestServiceDownloadRequest">
  <wsdl:part element="intf:requestServiceDownload" name="parameters" />
  </wsdl:message>
 <wsdl: message name="requestServiceDownloadResponse">
  <wsdl:part element="intf:requestServiceDownloadResponse" name="parameters"/>
  </wsdl:message>
```

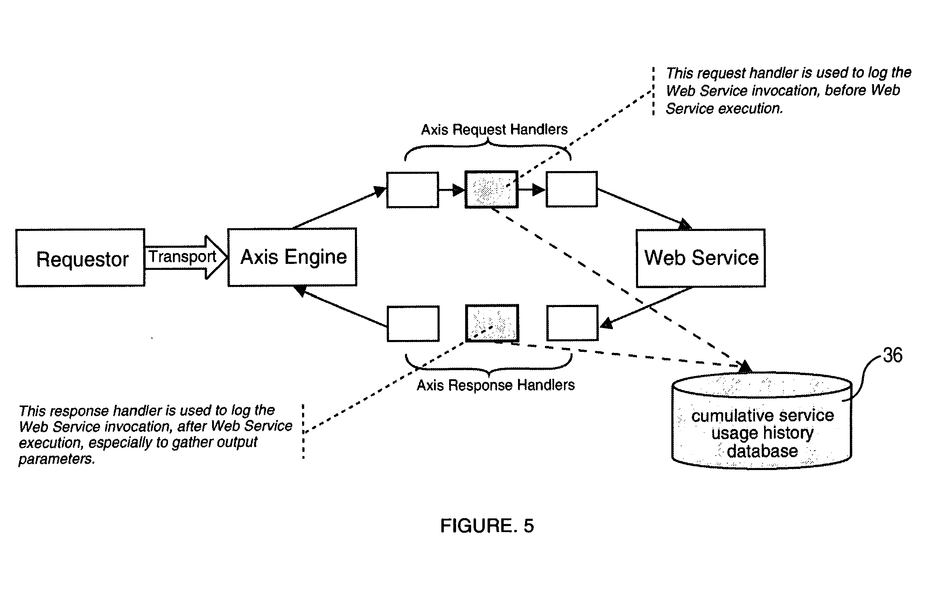

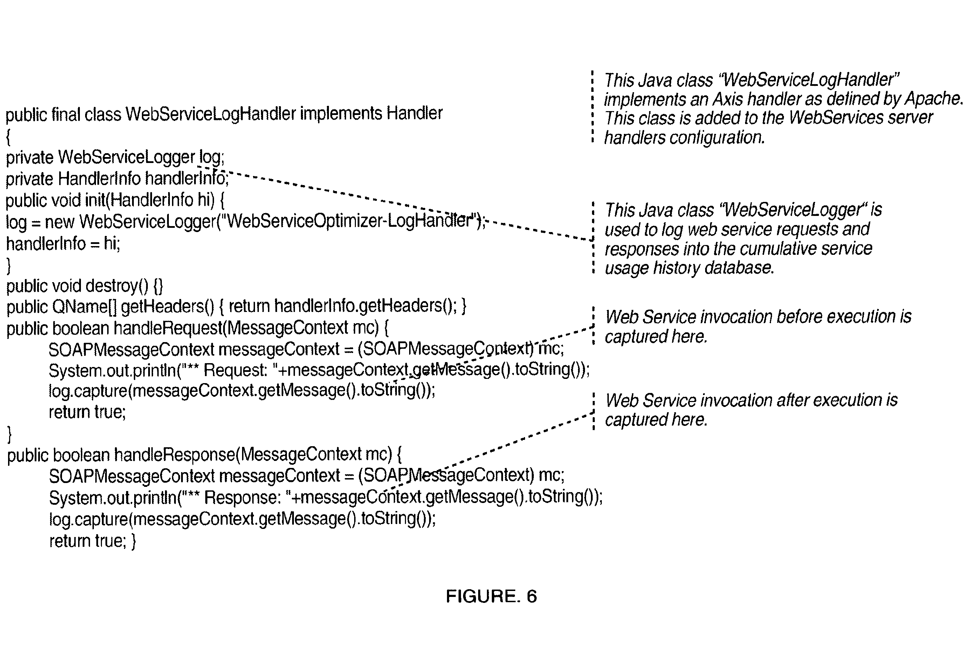

One particular known arrangement for capturing (logging and storing) service invocation data is illustrated in figure 5. This utilises the Apache Axis engine. The service invocation data capturing mechanism will consist of one Axis request handler and one Axis response handler. Both will capture and log the full calling context in the cumulative usage history database 36 in a known manner. Figure 6 provides an example Java source code for implementing this invocation data capturing method using an Apache Axis engine.

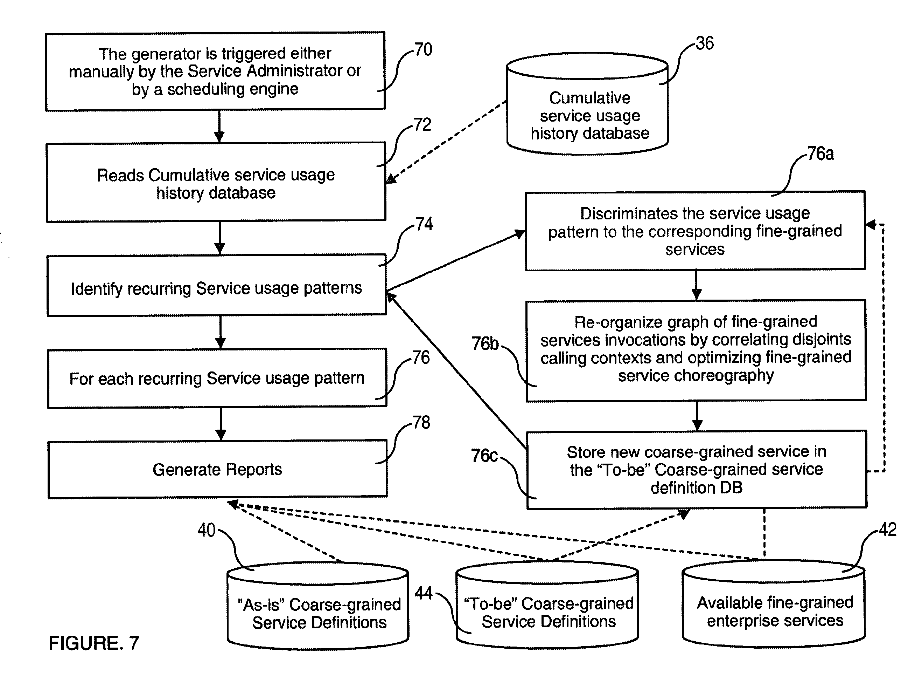

A second method part 52 of the invention is schematically illustrated in figure 7. This comprises a series of steps beginning with the step 70 of triggering of the service interface generating component 24 by a scheduling engine (not shown) or a service administrator 18, for example. Alternatively, the service interface generating component 24 may be triggered automatically if a discrepancy is identified. A discrepancy may be identified through a process of determining whether the services being invoked are being used in a manner expected by the services designer. This can be determined by comparing how the services are actually being used to how they were expected to be used. This comparison results from a monitoring process of the "As-is" coarse-grained services definitions database 40 and the "To-be" coarse-grained services definitions database 44. A discrepancy is discovered by comparing the number of service interfaces (definitions) contained in each of said databases and the content of these service interfaces. When the monitoring process reveals that the contents of the two databases are no longer identical or nearly identical, this is recognised as a discrepancy and is used to trigger the interface generating component 24. The monitoring process of the contents of the two databases 40, 44 can be conducted by the service execution engine 14.

In a next step 72, stored service usage data is read by the service request affinity analyser 26 which analyses said data in step 74 in order to identify recurring service usage patterns . The step of identifying recurring usage patterns could be implemented generally in accordance with any one of the schemes taught in United States Patent Number 5661668, United States Patent Number 6249755 or United States Patent Number 6516288.

For each identified recurring usage pattern (step 76), the inference engine 28 discriminates (step 76a) the service usage pattern to identify the corresponding fine-grained services comprising said usage pattern. These are reorganised (step 76b) as a graph of fine-grained service invocations by correlating disjoints in the calling contexts by the inference engine 28 to produce, through optimisation, a coarse-grained service definition by choreographing the fine-grained service definitions. The organisation of the fine-grained services comprising a usage pattern as a graph can be described with the Business Process Execution Language for Web Services. They are two kinds of service usage patterns:
- patterns that identify several service calls which share the same calling context thus creating the potential to create bigger coarse grained service; and
- patterns that identify partial service interface usage thus creating the potential to reduce the functionality of a coarse-grained service with the limit of going back to a single fine-grained service.

The new coarse-grained service definition (interface) is stored (step 76c) in the "To-be" coarse-grained service database 44 where a decision is taken (method first part 50, decision point 54) to then transfer the new service definition to the deployed services database 16 for deployment or whether some additional manual design is required to make it ready for deployment. The final step 78 may be to generate reports that can be reviewed by a services administrator 18 and/or a services designer 20.

The present invention makes use of logged service usage data to automatically generate new service definitions, said new service definitions comprising one or more available fine-grained service definitions.

## Claims

1. A method of automatically generating a service interface for a machine implementable application, the method being **characterised in that** it comprises the steps of:
deploying a plurality of service interfaces (16) defining respective services associated with said application;
logging (50) data (36) recording usage of the operations in the services defined by said service interfaces;
identifying (74) from said usage data a recurring service usage pattern; and,
in response to said identified recurring service usage pattern, automatically generating (24) a new operation in a new service interface.

2. A method as claimed in claim 1, **characterised in that** the step of generating a new service interface comprises modifying one or more existing service interfaces.

3. A method as claimed in claim 1 or claim 2, **characterised in that** the or each service interface embodies one or more functions comprising said machine implementable application.

4. A method as claimed in claim 3, **characterised in that** the step of generating a new service interface comprises combining the functions of a number of existing service interfaces.

5. A method as claimed in any preceding claim, **characterised in that** the step of logging data recording usage of a service comprises storing data comprising a service invocation signature in a service usage history database.

6. A method as claimed in claim 5, **characterised in that** the service invocation signature is logged before and/or after the service is executed.

7. A method as claimed in claim 5 or claim 6, **characterised in that** the service invocation signature data is stored in the service usage history database together with data for any one or a combination of calling context, timestamp and invocation parameters.

8. A method as claimed in claim 7, **characterised in that** the calling context data comprises a caller identifier and a calling session identifier.

9. A method as claimed in claim 8, **characterised in that** it includes the step of connecting to a caller identifier database to retrieve caller data comprising any one or a combination of name, phone number and email address.

10. A method as claimed in any preceding claim, **characterised in that** the step of identifying from said usage data a recurring service usage pattern comprises discriminating the service usage pattern to form a corresponding set of fine-grained and/or coarse-grained services.

11. A method as claimed in claim 10, **characterised in that** the step of generating (76c) a new service interface comprises generating a new coarse-grained service interface by combining a number of the fine-grained and/or coarse-grained service interfaces discriminated from the service usage pattern.

12. A method as claimed in claim 11, **characterised in that** the new coarse-grained service interface is stored in a deployed services database (16).

13. A method as claimed in claim 11, **characterised in that** the new coarse-grained service interface is stored in a "To be" coarse-grained service definition database (44) prior to being deployed.

14. A method as claimed in any preceding claim, **characterised in that** the step of automatically generating a new service interface is triggered by any one or a combination of a human operative, a system administrator and a scheduling engine.

15. A method as claimed in any one of claims 1 to 13, **characterised in that** the step of automatically generating a new service interface is automatically triggered by a recurring service usage pattern.

16. A method as claimed in any preceding claim, **characterised in that** a new service interface is automatically generated for deployment in a Service Oriented Architecture (SOA).

17. A computer program product comprising programming code instructions for executing the steps of the method according to any one of claims 1 to 16 when said program is executed on a computer.

18. A system comprising means adapted for carrying out the method according to anyone of claims 1 to 16.

## Patentansprüche

1. Verfahren für das automatische Erzeugen einer Dienstschnittstelle für eine Anwendung, die von einer Maschine realisiert werden kann, wobei das Verfahren **dadurch gekennzeichnet ist, dass** es die folgenden Schritte umfasst:
Verwenden einer Vielzahl von Dienstschnittstellen (16), die entsprechende Dienste definieren, welche der Anwendung zugehörig sind;
Protokollieren (50) von Daten (36), welche die Nutzung der Operationen in den Diensten aufzeichnen, die von den Dienstschnittstellen definiert werden.
Erkennen (74) eines sich wiederholenden Dienstnutzungsmusters in den Nutzungsdaten; und
als Reaktion auf das erkannte sich wiederholende Dienstnutzungsmuster, automatisches Erzeugen (24) einer neuen Operation in einer neuen Dienstschnittstelle.

2. Verfahren nach Anspruch 1, das **dadurch gekennzeichnet ist, dass** der Schritt des Erzeugens einer neuen Dienstschnittstelle das Ändern einer oder mehrerer bestehender Dienstschnittstellen umfasst.

3. Verfahren nach Anspruch 1 oder 2, das **dadurch gekennzeichnet ist, dass** die bzw. jede Dienstschnittstelle eine oder mehrere Funktion(en) beinhaltet, welche die von einer Maschine realisierbare Anwendung umfasst/umfassen.

4. Verfahren nach Anspruch 3, das **dadurch gekennzeichnet ist, dass** der Schritt des Erzeugens einer neuen Dienstschnittstelle das Bündeln der Funktionen einer Anzahl bestehender Dienstschnittstellen umfasst.

5. Verfahren nach einem beliebigen vorangegangenen Anspruch, das **dadurch gekennzeichnet ist, dass** der Schritt des Protokollierens von Daten, welche die Nutzung eines Dienstes aufzeichnen, das Speichern von Daten umfasst, die eine Dienstaufrufsignatur in einer Datenbank der Dienstnutzungsgeschichte umfassen.

6. Verfahren nach Anspruch 5, das **dadurch gekennzeichnet ist, dass** die Dienstaufrufsignatur protokolliert vor und/oder nach der Ausführung des Dienstes protokolliert wird.

7. Verfahren nach Anspruch 5 oder 6, das **dadurch gekennzeichnet ist, dass** die Dienstaufrufsignaturdaten gemeinsam mit Daten für einen beliebigen Anfrufkontext-, Zeitmarken- und Aufrufparameter oder aber eine Kombination hiervon in der Datenbank der Dienstnutzungsgeschichte gespeichert werden.

8. Verfahren nach Anspruch 7, das **dadurch gekennzeichnet ist, dass** die Anrufkontextdaten einen Anruferbezeichner und einen Anrufsitzungsbezeichner umfassen.

9. Verfahren nach Anspruch 8, das **dadurch gekennzeichnet ist, dass** es den Schritt des Verbindens mit einer Anruferbezeichnerdatenbank beinhaltet, um so Anruferdaten abzurufen, die einen Namen, eine Telefonnummer und eine eMail-Adresse oder aber eine Kombination hiervon umfassen.

10. Verfahren nach einem beliebigen vorangegangenen Anspruch, das **dadurch gekennzeichnet ist, dass** der Schritt des Erkennens eines sich wiederholenden Dienstnutzungsmusters in den Nutzungsdaten das Unterscheiden des Dienstnutzungsmusters umfasst, um so einen entsprechenden Satz von feinkörnigen und/oder grobkörnigen Diensten zu bilden.

11. Verfahren nach Anspruch 10, das **dadurch gekennzeichnet ist, dass** der Schritt des Erzeugens (76c) einer neuen Dienstschnittstelle das Erzeugen einer neuen grobkörnigen Dienstschnittstelle umfasst, indem eine Anzahl der feinkörnigen und/oder grobkörnigen Dienstschnittstellen miteinander kombiniert werden, die in dem Dienstnutzungsmuster unterschieden wurden.

12. Verfahren nach Anspruch 11, das **dadurch gekennzeichnet ist, dass** die neue grobkörnige Dienstschnittstelle in einer Datenbank (16) der verwendeten Dienste gespeichert wird.

13. Verfahren nach Anspruch 11, das **dadurch gekennzeichnet ist, dass** die neue grobkörnige Dienstschnittstelle in einer Datenbank 44 der künftigen grobkörnigen Dienstdefinitionen gespeichert wird, bevor sie verwendet wird.

14. Verfahren nach einem beliebigen vorangegangenen Anspruch, das **dadurch gekennzeichnet ist, dass** der Schritt des automatischen Erzeugens einer neuen Dienstschnittstelle von einer beliebigen Bedienperson, einem Systemverwalter oder einer Zeitsteuerungsmaschine oder aber einer Kombination hiervon ausgelöst wird.

15. Verfahren nach einem beliebigen der Ansprüche 1 bis 13, das **dadurch gekennzeichnet ist, dass** der Schritt des automatischen Erzeugens einer neuen Dienstschnittstelle automatisch von einem sich wiederholenden Dienstnutzungsmuster ausgelöst wird.

16. Verfahren nach einem beliebigen vorangegangenen Anspruch, das **dadurch gekennzeichnet ist, dass** automatisch eine neue Dienstschnittstelle zur Verwendung in einer dienstorientierten Architektur (Service-Oriented Architecture, SOA) erzeugt wird.

17. Computerprogrammprodukt, das Programmcodebefehle für das Ausführen der Schritte des Verfahrens gemäß einem beliebigen der Ansprüche 1 bis 16 umfasst, wenn das Programm auf einem Computer ausgeführt wird.

18. System, das ein Mittel umfasst, welches so gestaltet ist, dass es das Verfahren gemäß einem beliebigen der Ansprüche 1 bis 16 ausführt.

## Revendications

1. Un procédé de génération automatique d'une interface de service pour une application susceptible d'être mise en oeuvre sur machine, le procédé étant **caractérisé en ce qu'**il comprend les étapes consistant à :
déployer une pluralité d'interfaces de service (16), définissant des services respectifs associés à ladite application ;
journaliser (50) l'usage d'enregistrement de données (36), des opérations effectuées dans les services définis par lesdites interfaces de service ;
identifier (74), à partir desdites données d'usage, un motif d'usage récurent de services ; et
en réponse audit motif d'usage récurent de services ayant été identifié, générer automatiquement (24) une nouvelle opération dans une nouvelle interface de service.

2. Un procédé tel que revendiqué à la revendication 1, **caractérisé en ce que** l'étape de génération d'une nouvelle interface de service comprend une modification d'une ou plusieurs interface(s) de service existante(s).

3. Un procédé tel que revendiqué à la revendication 1 ou à la revendication 2, **caractérisé en ce que** la ou chaque interface de service met en oeuvre une ou plusieurs fonction(s), comprenant ladite application susceptible d'être mise en oeuvre sur une machine.

4. Un procédé tel que revendiqué à la revendication 3, **caractérisé en ce que** l'étape de génération d'une nouvelle interface de service comprend la combinaison des fonctions d'un certain nombre d'interfaces de service existantes.

5. Un procédé tel que revendiqué à l'une quelconque des revendications précédentes, **caractérisé en ce que** l'étape de journalisation d'usage d'enregistrement de données d'un service comprend le stockage de données comprenant une signature de demande de service dans une base de données d'historique d'usage de services.

6. Un procédé tel que revendiqué à la revendication 5, **caractérisé en ce que** la signature de demande de service est enregistrée chronologiquement avant et/ou après que le service ait été exécuté.

7. Un procédé tel que revendiqué à la revendication 5 ou la revendication 6, **caractérisé en ce que** les données de signature de demande de service sont stockées dans la base de données d'historique d'usage de service conjointement avec des données concernant l'une quelconque ou une combinaison d'un contexte d'appel, d'une estampille temporelle et de paramètres de demande.

8. Un procédé tel que revendiqué à la revendication 7, **caractérisé en ce que** les données de contexte d'appel comprennent un identificateur d'appelant et un identificateur de session d'appel.

9. Un procédé tel que revendiqué à la revendication 8, **caractérisé en ce qu'**il comprend l'étape de connexion à une base de données d'identificateur d'appelant pour récupérer des données d'appelant comprenant l'une quelconque ou une combinaison de noms, de numéros de téléphone et d'adresses de courriel.

10. Un procédé tel que revendiqué à l'une quelconque des revendications précédentes, **caractérisé en ce que** l'étape d'identification, à partir desdites données d'usage, d'un motif d'usage récurent de services, comprend la discrimination du motif d'usage de service pour former un jeu correspondant de services à granularité fine et/ou à granularité grossière.

11. Un procédé tel que revendiqué à la revendication 10, **caractérisé en ce que** l'étape de génération (76c) d'une nouvelle interface de service comprend la génération d'une nouvelle interface de service à granularité grossière, par combinaison d'un certain nombre d'interfaces de service à granularité fine et/ou à granularité grossière, discriminées d'après le motif d'usage de services.

12. Un procédé tel que revendiqué à la revendication 11, **caractérisé en ce que** la nouvelle interface de service à granularité grossière est stockée dans une base de données de services (16) déployée.

13. Un procédé tel que revendiqué à la revendication 11, **caractérisé en ce que** la nouvelle interface de service à granularité grossière est stockée dans une base de données à définition de service à granularité grossière (44) "To be", avant d'être déployée.

14. Un procédé tel que revendiqué à l'une quelconque des revendications précédentes, **caractérisé en ce que** l'étape de génération automatique d'une nouvelle interface de service est déclenchée par l'une quelconque ou une combinaison d'un opérateur humain, d'un administrateur de système et d'un moteur de programmation.

15. Un procédé tel que revendiqué à l'une quelconque des revendications 1 à 13, **caractérisé en ce que** l'étape de génération automatique d'une nouvelle interface de service est déclenchée automatiquement par un motif d'usage récurent de service.

16. Un procédé tel que revendiqué à l'une quelconque des revendications précédentes, **caractérisé en ce qu'**une nouvelle interface de service est automatiquement générée, pour déploiement dans une Architecture Orientée Objet (SOA).

17. Un produit de programme pour ordinateur, comprenant des instructions de code de programmation, pour exécution des étapes du procédé selon l'une quelconque des revendications 1 à 16, lorsque ledit programme est exécuté sur un ordinateur.

18. Un système comprenant des moyens, adaptés pour mettre en oeuvre le procédé selon l'une quelconque des revendications 1 à 16.
